(19) Europäisches Patentamt
European Patent Office
Office européen des brevets

(11) **EP 4 195 106 A1**

(12) **EUROPEAN PATENT APPLICATION**

(43) Date of publication:
**14.06.2023 Bulletin 2023/24**

(21) Application number: **21212911.8**

(22) Date of filing: **07.12.2021**

(51) International Patent Classification (IPC):
*G06N 3/08* (2023.01)    *G06N 3/04* (2023.01)

(52) Cooperative Patent Classification (CPC):
**G06N 3/084; G06N 3/049; G06N 3/09**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(72) Inventors:
• **VAN GERVEN, Marcel Antonius Johannes**
  **6500 HC Nijmegen (NL)**
• **AHMAD, Nasir**
  **6500 HC Nijmegen (NL)**

(74) Representative: **Nederlandsch Octrooibureau**
**P.O. Box 29720**
**2502 LS The Hague (NL)**

(71) Applicant: **Stichting Radboud Universiteit**
**6525 XZ Nijmegen (NL)**

(54) **CONSTRAINED WEIGHT INFERENCE FOR ONLINE DISTRIBUTED LEARNING**

(57)    A computer system comprising an artificial neural network comprising a plurality of units to learn a certain task, wherein the units are directionally connected and the network as a whole is organized to generate an output based on an input. The neural network is configured to calculate (303) an internal state value for each unit of the neural network, based on output values of the other units of the neural, weights associated with the directional connections in the neural network acting between pairs of units, and a perturbation value associated with each unit of the neural network, wherein the output value of a subset of units of the network corresponds to an input value of the neural network and the output values of a different subset of units comprise the output of the neural network.

# Fig. 1

**Description**

FIELD OF THE INVENTION

The invention relates to a computer system comprising an artificial neural network comprising a plurality of units configured to generate an output based on an input. The invention further relates to a neuromorphic computer system. The invention further relates to a method of training an artificial neural network comprising a plurality of units configured to generate an output based on an input.

BACKGROUND OF THE INVENTION

Artificial neural networks have seen a lot of development recently. Multi-layered perceptrons have evolved into complex deep learning models. Moreover, hardware developments have allowed to train increasingly large and complex neural networks. Computer processors and distributed computer systems have become more powerful. Also, hardware has been developed, specifically for neural networks, that allows certain tasks to be processed in parallel. For example, neuromorphic hardware has the ability to perform operations in a massively parallel fashion. Nevertheless, neural networks are still limited in their capabilities as regards efficiency of the training process and the ability to execute this training in a continuous and online fashion.

SUMMARY OF THE INVENTION

It is an object of the invention to provide a system that can address this concern.
According to a first aspect, a computer system comprises an artificial neural network comprising a plurality of units configured to generate an output based on an input,

wherein the units are interconnected via directional connections so that each connection connects a pre-synaptic (sending) unit to a post-synaptic (receiving) unit,
wherein a first subset of the units are input units, and an output value of an input unit corresponds to an input value of the neural network,
wherein a second subset of units are output units, and an output value of an output unit corresponds to an output value of the neural network;
wherein a third subset of units excluding the first subset and the second subset are internal units of the neural network;
wherein the neural network is configured to:
calculate an internal state value for each internal and output unit of the neural network based on output values of pre-synaptic units connected to each respective unit, weights associated with the directional connections of which each respective unit is the post-synaptic unit, and a perturbation value associated with each respective unit;
calculate an output value for each internal and output unit of the neural network, based on an activation function and the internal state value of the respective unit;
calculate a perturbation value and an adjusted internal state associated with an output unit of the neural network based upon a loss function capturing a desired network behaviour;
calculate the perturbation value associated with each internal unit based on the internal states or output values of the post-synaptic units of connections of which each internal unit is the pre-synaptic unit; and
update the weight associated with each directional connection between its pre-synaptic and post-synaptic unit of the neural network based upon at least one of the internal state and the output value of the post-synaptic unit and the pre-synaptic unit. Since the perturbation value associated with each internal unit is based on the internal states or output values of the post-synaptic units of connections of which each internal unit is the pre-synaptic unit, the perturbation values are allowed to propagate 'backwards' as a correction signal along the connections of the network. The output values propagated through the network in the forward direction and the perturbation values propagated in the backward direction can be calculated asynchronously by virtue of the present invention. This allows a continuous operation combining the output calculation with propagation of the perturbation and weight updates. This way, it is not necessary to implement separate steps of forward propagation (output calculation) and backward error propagation. Thus, the forward propagation of outputs and the backwards propagation of perturbation can be performed simultaneously. This allows the simultaneous execution and training of an artificial neural network system.

The neural network may be further configured to learn a plurality of decorrelating connections in respect of a plurality of pre-synaptic units that are connected to a same post-synaptic unit, based upon a correlation between the output values of the plurality of pre-synaptic units that are connected to the same post-synaptic unit. The correlations between the output values of all pre-synaptic units to a single post-synaptic unit were found to be a confounding factor for efficient training using the system set forth. Therefore, the decorrelating connections help to remove correlations between the output values which affect a post-synaptic unit's activity. These decorrelating connections may exist between all units that act as pre-synaptic units to the same post-synaptic unit. For example, in a layered neural network decorrelating connections could exist between all units within each particular layer of the neural network.

The neural network may be configured to compute the output value of each unit of the particular layer of the neural network further based on the decorrelating parameters, in order to decorrelate the output values of the plurality of pre-synaptic units that are connected to the same post-synaptic unit.

The neural network may be configured to learn the decorrelating parameters by measuring a sample-wise cross-correlation between the output values of the units of the plurality of pre-synaptic units that are connected to the same post-synaptic unit. This way, the decorrelating parameters do not have to be calculated in a separate step. Rather, they may be calculated gradually as a learning procedure while the network is trained sample-by-sample.

The neural network may be configured to learn the decorrelating parameters and the weights simultaneously. The decorrelating parameters may be updated based on the outputs of the plurality of pre-synaptic units that are connected to the same post-synaptic unit. The weights of the directional conections between the plurality of pre-synaptic units that are connected to the same post-synaptic unit may be updated based on at least one of the internal state and the output value of the plurality of pre-synaptic units that are connected to the same post-synaptic unit and the same post-synaptic unit. This further improves the efficiency and accuracy of the end result.

The neural network may be configured to update the output values of the internal units of the neural network, the weights associated with the directional connections of the neural network, the decorrelating parameters, and/or the perturbation value associated with each unit, based on at least one continuous differential equation. The differential equation describes the calculation steps asynchronously, because while the network is provided with a certain data sample of input values and an adjusted output direction (e.g. a target output or desired output), the calculated values evolve towards a new value over time, rather than being assigned a specific value.

The neural network may be configured to generate a continuous signal in respect of at least one of the output values of the units of the neural network, the weights associated with the directional connections between units of the neural network, the decorrelating parameters, or the perturbation value associated with each unit, wherein the continuous signal is configured to change according to the at least one continuous differential equation. This facilitates implementation on analog hardware, for example.

The neural network may be alternatively configured to generate a sequence of values at discrete time points in respect of at least one of the output value of the units of the neural network, the weights associated with the directional connections between units of the neural network, the decorrelating parameters, and/or the perturbation value associated with each unit, based on the at least one continuous differential equation. For example, a plurality of values for a plurality of sequential discrete time points may be generated for a single data combination of network input values and network output values. This may be implemented on digital computer hardware, for example.

The neural network may be configured to perform the calculation of the perturbation value associated with each internal unit of the neural network further based on the weights of the directional connections of which each internal unit is the pre-synaptic unit. This calculation step may help to obtain a training result similar to backpropagation of error.

According to another aspect of the invention, a computer system comprises an artificial neural network comprising a plurality of units, wherein the units are organized in a plurality of ordered layers to generate an output based on an input, wherein the neural network is configured to: calculate an internal state value for each unit of a particular layer of the neural network, based on output values of the units of a next-lower ranking layer of the neural network with respect to the particular layer, weights associated with the output values of the units of the next-lower ranking layer of the neural network, and a perturbation value associated with each unit of the particular layer of the neural network, wherein the output value of each unit of a lowest-ranking layer of the neural network corresponds to an input value of the neural network; calculate an output value for each unit of the particular layer of the neural network, based on an activation function and the internal state value of the unit; calculate (301) a perturbation value and an internal state associated with each unit of a highest-ranking layer of the neural network based on a loss function; calculate the perturbation value associated with each unit of the particular layer based on the internal states of the units of a next-higher ranking layer of the neural network with respect to the particular layer; and update (306) the weights associated with the output values of the units of the next-lower ranking layer of the neural network, based on the internal state of each unit of the particular layer of the neural network and the output value of each unit of the next-lower ranking layer of the neural network.

According to another aspect of the invention, a neuromorphic computer system is provided comprising a system set forth. A neuromorphic computer system is particularly suited to perform the calculations asynchronously and efficiently.

The system may be configured to learn to perform at least one of: signal processing, image processing, image recognition, image enhancement, audio processing, audio recognition, speech recognition, audio enhancement, fault detection of devices, measurement analysis and control.

The system may be deployed to implement on-chip or on-device continuous learning with or without a small power envelope for low-power on-chip learning and inference.

According to another aspect of the invention, a method of training an artificial neural network comprising a plurality of units configured to generate an output based on an input is provided,

wherein the units are interconnected via directional connections so that each connection has a pre-synaptic unit and a post-synaptic unit,
wherein a first subset of the units are input units, and an output value of an input unit corresponds to an input value of the neural network,
wherein a second subset of units are output units, and an output value of an output unit corresponds to an output value of the neural network;
wherein a third subset of units excluding the first subset and the second subset are internal units of the neural network;
wherein the method comprises:

calculating an internal state value for each internal and output unit of the neural network based on output values of pre-synaptic units connected to each respective unit, weights associated with the directional connections of which each respective unit is the post-synaptic unit, and a perturbation value associated with each respective unit;
calculating an output value for each internal and output unit of the neural network, based on an activation function and the internal state value of the respective unit;
calculating a perturbation value and an internal state associated with an output unit of the neural network based upon a loss function capturing a desired network behaviour;
calculating the perturbation value associated with each internal unit based on the internal states of the post-synaptic units of connections of which each internal unit is the pre-synaptic unit; and
updating the weight associated with each directional connection between a pre-synaptic unit and a post-synaptic unit of the neural network based upon at least one of the internal state and the output value of the post-synaptic unit and the pre-synaptic unit.

The method may be configured to learn the neural network to perform a task of at least one of: signal processing, image processing, image recognition, image enhancement, audio processing, audio recognition, speech recognition, audio enhancement, fault detection of devices, measurement analysis and control.

The method may be deployed to implement on-chip or on-device continuous learning with or without a small power envelope for low-power on-chip learning and inference.

According to another aspect, a computer program product comprises instructions that, when executed by a processor system, cause the processor system to perform the method set forth.

The person skilled in the art will understand that the features described above may be combined in any way deemed useful. Moreover, modifications and variations described in respect of the system may likewise be applied to the method and to the computer program product, and modifications and variations described in respect of the method may likewise be applied to the system and to the computer program product.

BRIEF DESCRIPTION OF THE DRAWINGS

In the following, aspects of the invention will be elucidated by means of examples, with reference to the drawings. The drawings are diagrammatic and may not be drawn to scale. Throughout the drawings, similar items may be marked with the same reference numerals.

Fig. 1 shows a schematic diagram of units within a neural network.
Fig. 2 shows a flowchart of a method of training a neural network.
Fig. 3 shows a diagram illustrating aspects of updating network state and parameters.

DETAILED DESCRIPTION OF EMBODIMENTS

Certain exemplary embodiments will be described in greater detail, with reference to the accompanying drawings. In the following detailed description, we consider the specific case of a layered network structure, i.e. the directional weights of the neural network can be grouped such that the computation of network outputs from network inputs can be described by the transformation through a set of layers. This makes explicitly clear the units which act as pre-synaptic inputs to other units, thereby enabling a clear explanation of the function of the decorrelating connections. However, the disclosed techniques are not limited thereto. Indeed, any structure of directed connections may be employed, preferably any acyclic structure. In the present disclosure, a pair of connected units is referred to as a pre-synaptic unit and a post-synaptic unit. This means that the output of the pre-synaptic unit is used as an input of the post-synaptic unit. The connection between two units may be called a synapse.

The matters disclosed in the description, such as detailed construction and elements, are provided to assist in a comprehensive understanding of the exemplary embodiments. Accordingly, it is apparent that the exemplary embodiments can be carried out without those specifically defined matters. Also, well-known operations or structures are not described in detail, since they would obscure the description with unnecessary detail.

In this disclosure, a new algorithm is disclosed that, among other things, allows online learning of parameters of computational models that run in discrete time (for example on von Neumann machines and FPGAs) or continuous time (for example on neuromorphic hardware or within analog circuits). Thus, although in the following description the emphasis will be on a discrete-time implementation, this is not a limitation. The embodiments can equally be extended to continuous-time implementations that can implement continuous dynamics by means of e.g analog hardware. Thus, the method may be calculated in discrete steps in order to simulate it on general purpose computers. However, the method can also be implemented using analogue hardware whose electrical dynamics could be equivalent to the differential equations disclosed herein, and thereby the discrete time steps may be omitted.

The system and method described herein may be deployed, for example, for on-chip/on-device continuous learning with or without a small power envelope, applied in any such domain where potentially low-power on-chip learning and inference is useful (wearables, IOT, robotics, self-driving cars and more).

The present disclosure provides a new approach for online learning where learning and inference can proceed in parallel. On a standard von Neumann architecture we can discretize our differential equations and obtain an efficient alternative to gradient descent. On analog neuromorphic hardware, we can directly evaluate these differential equations. This provides great advantage to the approach disclosed herein, also as a new algorithm for implementing learning on neuromorphic chips.

Definitions:

$L$     Number of layers

$l$     Number of a layer, $l = 1, ... L$

$W^l$     modifiable forward weight matrix from the l-th to 'l+1'-th layer

$R^l$     modifiable lateral decorrelating weight matrix acting within the l-th layer

$\tau^y$     the (fixed) time constant governing speed of dynamics in respect of the output state of a unit

$\tau^R$     the (fixed) time constant governing speed of dynamics in respect of the lateral weight matrix

$\tau^W$     the (fixed) time constant governing speed of dynamics in respect of the forward weight matrix

$\Delta t$     the (fixed) timestep of integration

$T$     the (fixed) number of steps of integration

$h^l$     the hidden state of the units in layer l evolved over time (e.g. initialized at zero)

$h_i^l$     the hidden state of the units in layer l at timestep i

$y^l$     the output state of the units in layer l evolved over time (e.g. initialized at zero)

$y_i^l$     the output state of the units in layer l at timestep i

$y^0$     the input values (vector)

$y^*$     the adjusted output values (vector)

$f(\cdot)$     the activation function of each unit

$g^l(\cdot)$     a function representing the computed top-down perturbation of layer $l$

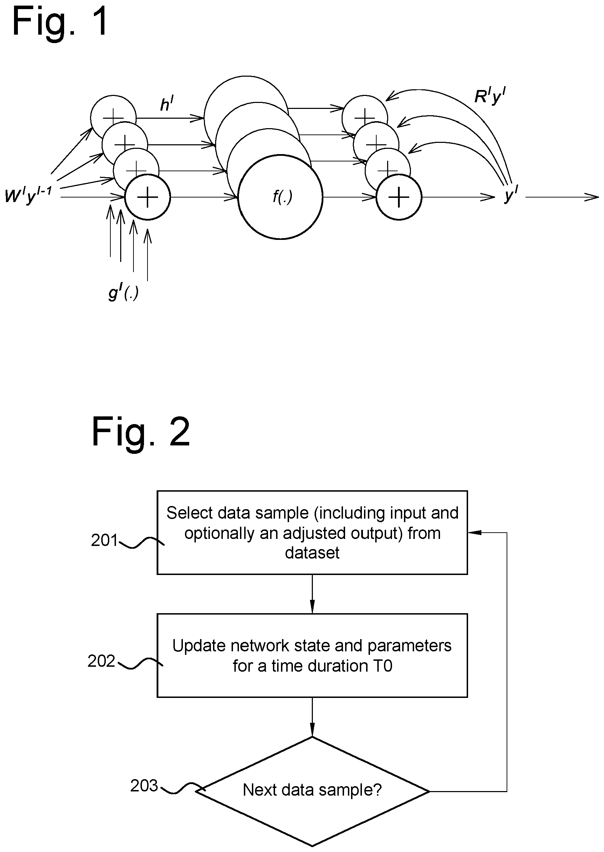

Fig. 1 shows a diagram of the inference signals exchanged in a single layer $l$ of the neural network. As shown, the inputs to the units of the layer are formed by the outputs $y^{l-1}$ of the units of the next-lower ranking layer. The weights may be applied to the inputs by multiplication of the input vector with a weight matrix, $W^l$. The resulting internal vector $h^l$ may then be perturbed by a perturbation vector signal $g^l(\cdot)$, whose value depends on the state of the units in the next-higher ranking layer, $l + 1$. This perturbation signal may be added to the internal state vector $h^l$. The preceding steps may be linear operations. An activation function, which may be a non-linear monotonous differentiable function, is applied to the internal state. The units of a layer may also communicate with each other, to avoid a situation in which multiple units of a layer model correlated features. Therefore, a decorrelating signal is exchanged between the units of a layer. This is illustrated in Fig. 1 by means of the decorrelating matrix $R^l$, describing the decorrelating connections between the units, which is applied to the outcome of the activation function $f(\cdot)$ to decorrelate the output value vector $y^l$. Although these operations have been illustrated for clarity as simple multiplication and addition operations in Fig. 1, this may not be the case in reality. In reality, the values of e.g. the outputs and internal states of the units may evolve towards the indicated value over time. In a discrete implementation the values may evolve in small steps, whereas in a continuous or analog implementation the values may smoothly evolve. At the same time, the weights $W^l$ and the decorrelating factors $R^l$ may evolve (again, in discrete steps or continuously). Typically, the weights and decorrelating factors may evolve at a lower rate than the internal states and the outputs. This way, the output of the units evolves quickly to a relevant result (inference) whereas the learning proceeds more slowly. This will be elaborated in greater detail in the following.

The Constrained Weight Interference method, disclosed herein, describes a process of learning the mapping between some inputs and desired outputs through a system of continuous dynamics. This includes feedforward and recurrent neural networks, where the former converge to a fixed point under constant input.

Consider a neural network composed of layers (each identified by an index labelled '$l$' with a value between 0 and L). Each layer has associated some internal state ($h^l$) and an output state ($y^l$) whose values evolve over time according to a differential equation. These states have dynamics which are determined by the parameters of the network (which determine its behavior, and especially the fixed points to which it converges). The parameters themselves are also described through continuous dynamics via differential equations. At least two types of parameters may be distinguished: the weight matrices, $W^l$, which may parameterize the transformation achieved by the directional connections from units of layer $l$ - 1 to $l$, and lateral (decorrelating) matrices, $R^l$, which may parametrize the decorrelating connections which produce a decorrelating transformation between units within each layer, $l$. Note that the dynamics of the parameters may be determined by variables in nearby layers. This means that the information that is used to update the parameters is *local.* This way, any kind of global memory copying may be avoided. This locality and the dynamic nature of the parameters and states provide great advantages for artificial neural networks. These properties also make the algorithm highly suitable for neuromorphic computing, for example.

Since we describe the time evolution of the system through differential equations, we also provide an example of the simplest method by which we could compute dynamics of the system forward in time. That is, through a forward-Euler numerical integration. This means that we 'step' each state and parameter of the system forward in time by some small amount of time, $\Delta_t$, by using the gradient of these parameters/states (given by the differential equations). The speed of the dynamics may be controlled by time constants of the differential equations, such as $\tau^y$, $\tau^W$, and $\tau^W$ in the present example. For example, we can set $\tau^W$ and $\tau^R$ to significantly larger values than $\tau^y$ -- meaning that the parameters of the system (the weights and decorrelating factors) change much more slowly than the states (the outputs of the units), so that the weights and decorrelating factors capture aspects of many data points from the input batches, rather than just one. The time step, $\Delta_t$, is independent of the time constants, though should be small enough that the dynamics are correctly computed. In an analog implementation, the time step would approximately zero.

During training, a data sample comprising a pair of a network input and an adjusted output is selected and evaluated by the network during a certain time period of e.g. T time steps of size $\Delta_t$. Note that, in certain embodiments, 'adjusted' output simply means that, depending upon the type of learning, the networks output is shifted in some 'better' direction. For example, for supervised learning this would be based upon a target network output. We may also define some unsupervised or reinforcement-based task and shift $y^L$ in some measured beneficial direction. As an example, suppose we have a specific loss function, $\mathcal{L}$ , which does not define targets for the output of the system, but instead is a loss function on the output, we can then suppose having an adjusted output, such that $y^* = y^L - \frac{d\mathcal{L}}{dy^L}$ , which effectively descends the gradient of our given loss. Let ($y^0$, $y^*$) be the network input and adjusted output at some time $t$. To make the update in a layer $l$, a top-down signal $g^l(\cdot)$ is evaluated which propagates adjusted output information relevant for learning to each layer and perturbs the hidden state dynamics. Note that we propagate this top-down signal within the activities of the units of the system, so that that no other apparatus for error propagation is needed. This system can use any suitable learning signal one might propose. Examples are a gradient-based learning signal, a GAIT-prop (Ahmad et al. 2020) learning signal or a feedback alignment signal, to name a few. Depending on the implementation of the learning signal, the techniques disclosed herein may be suitable for supervised learning, unsupervised learning and reinforcement learning depending on the nature of the learning signal.

We here provide an example of a gradient-based learning signal which will tend to cause our weight updates to converge to those of the backpropagation algorithm. Whittington et al. 2017 discloses a backpropagation algorithm. We formulate the top-down signal as the difference between an 'expected' and 'true' signal from the layer above, transformed by the gradient-relevant matrix multiplications. For example, we can define

$$g^l(h^l, h^{l+1}) = \frac{df(h^l)}{dh^l}\left(\left(I + R^l\right)^{-1}\right)^\mathsf{T}\left(W^{l+1}\right)^\mathsf{T}\left(h^{l+1} - W^{l+1}\left(I + R^l\right)^{-1}f(h^l)\right)$$

such that we are computing effectively a gradient-transformed difference between the expected and true activity in the next layer. The matrix $(I + R^l)^{-1}$ may capture a fixed-point transformation of our decorrelating process. Specifically, if you would compute a fixed point of the activity at any layer in the absence of any perturbation, you could arrive at $y^l = (I + R^l)^{-1} f(h^l)$. This fixed point transformation may be used for the gradient transformation. During inference, the top-down signal may decay to zero as the expected and true outputs of the layers are equivalent. However, during training an error signal may be provided at the output layer. For example, at the output layer $L$ of the neural network we may set the perturbation value differently, based on the actual output $y^L$ at the output layer $L$ of the neural network, and set

$$g^L(\cdot) = -\frac{d\mathcal{L}}{dh^L}$$ wherein $\mathcal{L}$ is some cost/loss function that may be determined based on the supervised target output values or unsupervised/reward function and the output actual output $y^L$. This perturbation value may be measured as a fixed difference and propagated in a top-down fashion through the system.

Fig. 2 shows a flowchart illustrating aspects of a learning procedure. In the learning procedure, a number of data samples may be provided to the system as a training data set. Each data sample may comprise a pair of an input (i.e. inputs to the input units of the neural network) and an optional adjusted output (i.e. target outputs or task-beneficial directions for the output units of the neural network). For network training, the adjusted output may be provided, whereas for inference (prediction) with this system the output can remain un-adjusted and the perturbation at the output layer can be set to zero, $g^L(\cdot) = 0$. Under these conditions, the system will do inference and produce an output but all other apparatus can remain without impact upon the system.

The network can alternatively carry out learning in order to capture the underlying relationship between the input and the output from the training data samples by successively evaluating these data samples, as follows. In step 201, a data sample may be selected including an input and an adjusted output. The selected data sample may be from a dataset or generated on-the-fly. The input may comprise input values to the units of an input layer of the neural network and the adjusted output may comprise targets for the output values of the units of an output layer of the neural network. Note that the target output may be omitted during inference. By means of notation, the input values are denoted as if they were output values of the units of the input layer 0, i.e. as a vector $y^0$. The target output values are denoted as a vector $y^*$. In step 202, these input values and adjusted output values are applied to the neural network for a certain time duration. In step 203, it is considered if another data sample should be provided for training. If so, the procedure is repeated from step 201. Otherwise, the training procedure may end.

As described previously, samples can alternatively be provided for inference (to determine the network's evaluation of the output). In this case, input samples alone may be selected and and may be presented with an output perturbation of zero.

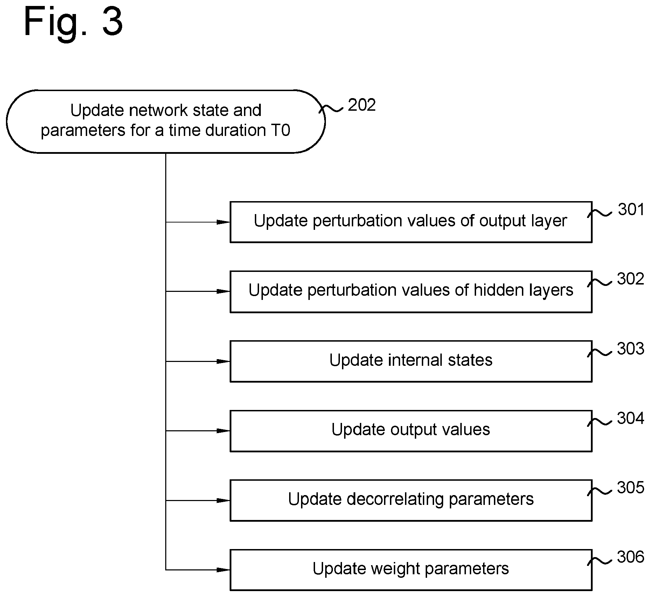

Fig. 3 illustrates an example implementation of step 202. As shown in the drawing, the different operations may be performed asynchronously, without prescribing a particular order. Also these operations may be performed in concurrently, in parallel.

In operation 301, the perturbation values of the output layer are set. During learning, these values are set based on the current output of the output layer $y^L$ and the cost function at the output. For example, a cost function C is defined, which might be based on a sum of squared errors. The perturbation may then be determined based on the gradient of the cost function:

$$g^L(y^L) = -\frac{d\mathcal{L}(y^L)}{dh^L}.$$

In operation 302, the perturbation values of the units of the other layers are determined, in a manner so that the values propagate backwards through the network. For example as follows:

$$g^l(y^{l+1}, y^l) = \frac{df(h^l)}{dh^l}\left((I + R^l)^{-1}\right)^{\mathsf{T}} (W^{l+1})^{\mathsf{T}}\left(h^{l+1} - W^{l+1}(I + R^l)^{-1} f(h^l)\right).$$

In operation 303, the internal states are updated. For example, they are set to:

$$h^l \leftarrow W^l y^{l-1} + g^l(h^l, h^{l+1}).$$

In operation 304, the output values of the units are updated. This may involve determining a rate of change, and updating the output values over time according to the rate of change. the rate of change may be determined by a differential equation, as follows:

$$\frac{dy^l}{dt} \leftarrow \frac{1}{\tau^y}\left(f(h^l) - R^l y^l - y^l\right)$$

In an analog implementation, the analog circuit may implement the output as an analog signal, such as a voltage or a pulse frequency. This signal may be changed over time according to the outcome of the differential equation.

In a discrete implementation, the values of the outputs may be updated in steps of a certain time step:

$$y^l \leftarrow y^l + \Delta_t \frac{dy^l}{dt}.$$

In operation 405, the decorrelating parameters may be updated, although this is an optional step. The directional decorrelating connection strengths may be determined based on the values of the outputs of the units in a single layer:

$$\frac{dR^l}{dt} \leftarrow \frac{1}{\tau^R}\left(y^l\left(y^l\right)^T - I\right).$$

The decorrelating parameters of a particular layer may comprise a decorrelating matrix wherein the number of rows and columns is equal to the number of units of the layer, for example.

In an analog implementation, the analog circuit may implement each decorrelating parameter as an analog signal, such as a voltage or a pulse frequency. This signal may be changed over time according to the outcome of the differential equation.

In a discrete implementation, the values of the decorrelating parameters may be updated in steps of a certain time step:

$$R^l \leftarrow R^l + \Delta_t \frac{dR^l}{dt}.$$

In operation 306, the weight parameters may be updated. The weight parameters of a particular layer may comprise a weight matrix wherein the number of columns is equal to the number of units in the next-lower ranking layer and the number of rows is equal to the number of units in the particular layer. The weight updates may be determined based on the internal states of the units in the particular layer and the output values of the units in the next-lower ranking layer, for example as follows:

$$\frac{dW^l}{dt} \leftarrow \frac{1}{\tau^W}\left(h^l\left(y^{l-1}\right)^T - W\right).$$

In an analog implementation, the analog circuit may implement each weight parameter as an analog signal, such as a voltage or a pulse frequency. This signal may be changed over time according to the outcome of the differential equation.

In a discrete implementation, the values of the weight parameters may be updated in steps of a certain time step:

$$W^l \leftarrow W^l + \Delta_t \frac{dW^l}{dt}.$$

In certain embodiments, there may be a mix between analog and discrete implementation. For example, the weights and decorrelating parameters might be updated in a discrete fashion, whereas the output signals may be analog.

In an alternative embodiment, to make it recurrent, the concept of layer-wise weight matrices may be omitted and instead a single (larger) weight matrix would govern the signals passing between all units, not necessarily in a layerwise fashion, and another matrix would govern and describe the decorrelating weights between the appropriate units (between all groups of units acting as pre-synaptic inputs to the same post-conneciton unit - thus having decorrelating weights between them).

Algorithm 1 summarizes features of another embodiment showing a discrete implementation, in accordance with Figs. 2 and 3. The symbols are not re-introduced for conciseness.

## Algorithm 1: discrete implementation learning phase

for each epoch do

    for each $(y^0, y^*) \in$ data do

        for T time steps of size $\Delta_t$ do

            for layers $L = 1$ to $L$ do

$$g^l \leftarrow \begin{cases} \dfrac{df(h^l)}{dh^l}\left(\left(I + R^l\right)^{-1}\right)^{\mathsf{T}}\left(W^{l+1}\right)^{\mathsf{T}}\left(h^{l+1} - W^{l+1}\left(I + R^l\right)^{-1}f(h^l)\right) & \text{for } l = 1, \ldots, L-1 \\[2ex] -\dfrac{d\mathcal{L}(y^*, y^L)}{dh^L} & \text{for } l = L \end{cases}$$

$$h^l \leftarrow W^l y^{l-1} + g^l(h^l, h^{l+1})$$

$$\frac{dy^l}{dt} \leftarrow \frac{1}{\tau^y}\left(f(h^l) - R^l y^l - y^l\right)$$

$$y^l \leftarrow y^l + \Delta_t \frac{dy^l}{dt}$$

$$\frac{dR^l}{dt} \leftarrow \frac{1}{\tau^R}\left(y^l\left(y^l\right)^{\mathsf{T}} - I\right)$$

$$\frac{dW^l}{dt} \leftarrow \frac{1}{\tau^W}\left(h^l\left(y^{l-1}\right)^{\mathsf{T}} - W\right)$$

$$W^l \leftarrow W^l + \Delta_t \frac{dW^l}{dt}$$

$$R^l \leftarrow R^l + \Delta_t \frac{dR^l}{dt}$$

            end for

          end for

        end for

    end for

In the above example pseudocode, specific examples are included for the formulas. However, these are merely presented by means of example. For example, the perturbation $g^l$ may be implemented with different values, as explained elsewhere in this description.

Algorithm 2 summarizes features of another embodiment showing a continuous implementation, in accordance with Figs. 2 and 3. The symbols are not re-introduced for conciseness.

## Algorithm 2: continuous implementation learning phase

for each epoch do

    for each $(y^0, y^*) \in$ data do

        for a particular time duration $T_0$ continuously set

$$g^l \leftarrow \begin{cases} \frac{df(h^l)}{dh^l}\left(\left(I + R^l\right)^{-1}\right)^{\mathsf{T}} \left(W^{l+1}\right)^{\mathsf{T}} \left(h^{l+1} - W^{l+1}\left(I + R^l\right)^{-1} f(h^l)\right) & \text{for } l = 1, \ldots, L-1 \\ -\frac{d\mathcal{L}(y^*, y^L)}{dh^L} & \text{for } l = L \end{cases}$$

$$h^l \leftarrow W^l y^{l-1} + g^l(h^l, h^{l+1}), \text{ for } l = 1, \ldots, L$$

$$\frac{dy^l}{dt} \leftarrow \frac{1}{\tau^y}\left(f(h^l) - R^l y^l - y^l\right), \text{ for } l = 1, \ldots, L$$

$$\frac{dR^l}{dt} \leftarrow \frac{1}{\tau^R}\left(y^l\left(y^l\right)^T - I\right), \text{ for } l = 1, \ldots, L$$

$$\frac{dW^l}{dt} \leftarrow \frac{1}{\tau^W}\left(h^l\left(y^{l-1}\right)^T - W\right), \text{ for } l = 1, \ldots, L$$

        end for

      end for

end for

After training the neural network, the network can be evaluated for new input data, to obtain output values by means of inference based on the weight parameters and the decorrelating parameters. In this case, the perturbation values $g^L$ of the output layer may be set to zero in operation 301 and in the above pseudocode algorithms. The values of $g^l$ for $l$ = 1, ..., $L$ - 1 may be allowed to evolve similar to the learning phase and will eventually settle into a zero state. Optionally all the perturbation values $g^l$, for $l$ = 1, ..., $L$ may directly be set to zero during inference, so that their equation does not have to be computed.

There are a number of key conceptual breakthroughs associated with this work. First, the idea that weight inference (a concept previously proposed to overcome the weight transport problem during backpropagation of error) can itself be used as a learning algorithm. This is a key insight as it supposes that you can construct systems in which a nudging of the system toward a desired output can be used for straightforward learning -- this can be used with backpropagation of error but also note that it could be used together with any credit assignment technique (e.g. GAIT-Prop, Ahmad et al., 2020). This includes techniques based on value functions and policy gradients as used in reinforcement learning. Importantly, we describe a system in which learning and evolution of network state co-exist -- an entire system of online dynamics. This system does not need halting in order to back-propagate errors or to update weights. Moreover, in a case where inference alone is desired (i.e. no learning is needed), the target signal at the output can be omitted (i.e. loss set to zero) and the system can continue to be run. This may effectively eliminate the blocking problem for training of neural networks and allows online learning in distributed systems.

The present disclosure may have a technological impact in implementations using both distributed computing in general and neuromorphic computing specifically. Taking distributed computing on the whole, this approach enables a system in which various nodes are involved in the computation of a neural network-like model and in which inter-node communication can be reduced to for example communications with the next-higher and the next-lower layer. Moreover, updates can be computed asynchronously. This has particular advantages also for the field of neuromorphic computing in which memory and computing power may be co-located within distributed 'dumb' processors. The ability to carry out learning based upon only the activities of input and output units makes learning extremely local in memory for these devices and may lead to reduced energy usage of neural training.

The present disclosure contains embodiments that can be implemented on standard computer systems, preferably on a massively parallel computer system, wherein for example each layer may be allocated to a different processor. Alternatively, each unit may be allocated to a different processor. The embodiments may alternatively be implemented using a field-programmable gate array (FPGA). For example, discrete implementations may be advantageously be implemented on such hardware.

The embodiments of the present invention may preferably be implemented on analog hardware and neuromorphic hardware. Examples of neuromorphic hardware on which the techniques may be advantageously implemented include, for example, Intel™ Loihi™, IBM™ TrueNorth™, SpiNNaker™, BrainScaleS™, or Neurogrid™ (see A. R. Young, M. E. Dean, J. S. Plank and G. S. Rose, "A Review of Spiking Neuromorphic Hardware Communication Systems," in IEEE Access, vol. 7, pp. 135606-135620, 2019, doi: 10.1109/ACCESS.2019.2941772).

The techniques disclosed herein may be applied to, for example, signal processing, image processing, image recognition, image enhancement, audio processing, audio recognition, speech recognition, audio enhancement, fault detection of devices, measurement analysis, and more. For example, in image processing and image enhancement, the network inputs may be mapped to image data and the network outputs may be mapped to processed image data. In image recognition, the network inputs may be mapped to image data and the network outputs may be mapped to a classification. In audio processing the network inputs may be mapped to audio data and the network outputs may be mapped to processed audio data. In audio recognition the network inputs may be mapped to audio data and the network outputs may be mapped to a classification. In speech recognition the network inputs may be mapped to audio data and the network outputs may be mapped to speech (for example characters).

The techniques disclosed herein may be applied, especially, to produce online adaptive systems. Particularly, given the possibility to do learning and inference in a mixed and arbitrarily ordered fashion, these techniques could be used to produce on-device continuously learning chips capable of receiving feedback from a user locally or from the environment in order to learn whenever possible and to otherwise carry out inference. Especially in the case of low-powered devices and chips (IOT, wearables, health monitoring and more), the implementation of the techniques described within a low-power envelope (i.e. neuromorphic computer) could allow local on-chip continuous learning without the requirement for connection to cloud-computing driven AI.

It is also possible that the inputs vary continuously in time (or in small timesteps). For example video data may be provided one frame after the other. For example the time step TO or t1 may be set equal to the framerate of the video signal, or more generally, to the sampling period of the input signal. The dynamic nature of the processing inside the neural network, using differential equations, makes the network particularly suitable for processing dynamic data, such as dynamic video data, audio data, or a sequence of measurements, or even an analog signal input such as those obtained using neuromorphic sensors (see e.g. M. Yang, S. -C. Liu and T. Delbruck, "A Dynamic Vision Sensor With 1% Temporal Contrast Sensitivity and In-Pixel Asynchronous Delta Modulator for Event Encoding," in IEEE Journal of Solid-State Circuits, vol. 50, no. 9, pp. 2149-2160, Sept. 2015, doi: 10.1109/JSSC.2015.2425886).

According to an embodiment, a computer system is provided comprising an artificial neural network comprising a plurality of units, wherein the units are organized in a plurality of ordered layers to generate an output based on an input, wherein the neural network is configured to: calculate (303) an internal state value for each unit of a particular layer of the neural network, based on output values of the units of a next-lower ranking layer of the neural network with respect to the particular layer, weights associated with the output values of the units of the next-lower ranking layer of the neural network, and a perturbation value associated with each unit of the particular layer of the neural network, wherein the output value of each unit of a lowest-ranking layer of the neural network corresponds to an input value of the neural network; calculate (304) an output value for each unit of the particular layer of the neural network, based on an activation function and the internal state value of the unit; calculate (301) a perturbation value and an internal state associated with each unit of a highest-ranking layer of the neural network based on a loss function relevant to the task being trained; calculate (302) the perturbation value associated with each unit of the particular layer based on the internal states of the units of a next-higher ranking layer of the neural network with respect to the particular layer; and update (306) the weights associated with the output values of the units of the next-lower ranking layer of the neural network, based on the internal state of each unit of the particular layer of the neural network and the output value of each unit of the next-lower ranking layer of the neural network.

In certain embodiments, the neural network is further configured to learn (305) a plurality of decorrelating parameters computed based upon a correlation between the output values of the units of the particular layer of the neural network. In certain embodiments, the neural network is configured to compute (304) the output value of each unit of the particular layer of the neural network further based on the decorrelating parameters, in order to decorrelate the output values of the particular layer of the neural network. In certain embodiments, the neural network is configured to learn (305) the decorrelating parameters by measuring a sample-wise cross correlation between the output values of the units of the particular layer. In certain embodiments, the neural network is configured to learn (305) the decorrelating parameters and the weights simultaneously, wherein the decorrelating parameters are updated based on the outputs of the certain layer and the weights are updated based on the internal state of each unit of the particular layer and the outputs of the units of the next-lower ranking layer. In certain embodiments, the plurality of ordered layers are connected recurrently over time for application to tasks with a temporal element and/or sequence of inputs/outputs. In certain embodiments, the neural network is configured to update (304) the output value of a unit of the particular layer of the neural network, the weights associated with the output values of the units of the next-lower ranking layer of the neural network, the decorrelating parameters, or the perturbation value associated with a unit, based on at least one continuous differential equation.

In certain embodiments, the neural network is configured to generate a continuous signal in respect of at least one of the output value (304) of the unit of the particular layer of the neural network, the weights (306) associated with the output values of the units of the next-lower ranking layer of the neural network, the decorrelating parameters (305), or the perturbation value (301, 302) associated with the unit, wherein the continuous signal is configured to change according to the at least one continuous differential equation.

In certain embodiments, the neural network is configured to generate a sequence of values at discrete time points in respect of at least one of the output value (304) of the unit of the particular layer of the neural network, the weights (306) associated with the output values of the units of the next-lower ranking layer of the neural network, the decorrelating parameters (305), or the perturbation value (301, 302) associated with the unit, based on the at least one continuous differential equation.

In certain embodiments, the neural network is configured to perform the calculation (302) of the perturbation value associated with each unit of the particular layer further based on the weights associated with the output values of the units of the particular layer of the neural network.

Another embodiment comprises a method of training an artificial neural network comprising a plurality of units, wherein the units are organized in a plurality of ordered layers to generate an output based on an input, wherein the method comprises: calculating (303) an internal state value for each unit of a particular layer of the neural network, based on output values of the units of a next-lower ranking layer of the neural network with respect to the particular layer, weights associated with the output values of the units of the next-lower ranking layer of the neural network, and a perturbation value associated with each unit of the particular layer of the neural network, wherein the output value of each unit of a lowest-ranking layer of the neural network corresponds to an input value of the neural network; calculating (304) an output value for each unit of the particular layer of the neural network, based on an activation function and the internal state value of the unit; calculating (301) a perturbation value and an internal state associated with each unit of a highest-ranking layer of the neural network based on a target output value of the neural network; calculating (302) the perturbation value associated with each unit of the particular layer based on the internal states of the units of a next-higher ranking layer of the neural network with respect to the particular layer; and updating (306) the weights associated with the output values of the units of the next-lower ranking layer of the neural network, based on the internal state of each unit of the particular layer of the neural network and the output value of each unit of the next-lower ranking layer of the neural network.

Some or all aspects of the invention may be suitable for being implemented in form of software, in particular a computer program product. The computer program product may comprise a computer program stored on a non-transitory computer-readable media. Also, the computer program may be represented by a signal, such as an optic signal or an electro-magnetic signal, carried by a transmission medium such as an optic fiber cable or the air. The computer program may partly or entirely have the form of source code, object code, or pseudo code, suitable for being executed by a computer system or neuromorphic hardware. For example, the code may be executable by one or more processors a neuromorphic computer system.

The examples and embodiments described herein serve to illustrate rather than limit the invention. The person skilled in the art will be able to design alternative embodiments without departing from the spirit and scope of the present disclosure, as defined by the appended claims and their equivalents. Reference signs placed in parentheses in the claims shall not be interpreted to limit the scope of the claims. Items described as separate entities in the claims or the description may be implemented as a single hardware or software item combining the features of the items described.

**Claims**

1. A computer system comprising an artificial neural network comprising a plurality of units configured to generate an output based on an input,

    wherein the units are interconnected via directional connections so that each connection has a pre-synaptic unit and a post-synaptic unit,
    wherein a first subset of the units are input units, and an output value of an input unit corresponds to an input value of the neural network,
    wherein a second subset of units are output units, and an output value of an output unit corresponds to an output value of the neural network;
    wherein a third subset of units excluding the first subset and the second subset are internal units of the neural network;
    wherein the neural network is configured to:

        calculate (303) an internal state value for each internal unit and output unit of the neural network based on output values of pre-synaptic units connected to each respective unit, weights associated with the directional connections of which each respective unit is the post-synaptic unit, and a perturbation value associated with each respective unit;

calculate (304) an output value for each internal and output unit of the neural network, based on an activation function and the internal state value of the respective unit;

calculate (301) a perturbation value and an internal state associated with an output unit of the neural network based upon a loss function capturing a desired network behaviour;

calculate (302) the perturbation value associated with each internal unit based on the internal states and/or output values of the post-synaptic units of connections of which each internal unit is the pre-synaptic unit; and

update (306) the weight associated with each directional connection between a first pre-synaptic unit and a first post-synaptic unit of the neural network based upon at least one of the internal state and the output value of the post-synaptic unit and the pre-synaptic unit.

2.  The system of claim 1, wherein the neural network is further configured to learn (305) a plurality of decorrelating parameters in respect of a plurality of pre-synaptic units that are connected to a same post-synaptic unit, based upon a correlation between the output values of the plurality of pre-synaptic units that are connected to the same post-synaptic unit.

3.  The system of claim 2, wherein the neural network is configured to compute (304) the output value of a post-synaptic unit of the plurality of units of the neural network further based on the decorrelating parameters, in order to decorrelate the output values of the plurality of pre-synaptic units that are connected to the same post-synaptic unit.

4.  The system of claim 2, wherein the neural network is configured to learn (305) the decorrelating parameters by measuring a sample-wise cross correlation between the output values of the units of the plurality of pre-synaptic units that are connected to the same post-synaptic unit.

5.  The system of claim 2, wherein

    the neural network is configured to learn (305, 306) the decorrelating parameters and the weights simultaneously,

    the decorrelating parameters are updated based on the outputs of the plurality of pre-synaptic units that are connected to the same post-synaptic unit, and

    the weights of the directional conections between the plurality of pre-synaptic units that are connected to the same post-synaptic unit and the same post-synaptic unit are updated based on at least one of the internal state and the output value of the plurality of pre-synaptic units that are connected to the same post-synaptic unit and the same post-synaptic unit.

6.  The system of claim 1 or 2, wherein the neural network is configured to update (304) the output values of the internal and output units of the neural network, the weights associated with the directional connections of the neural network, the decorrelating parameters, or the perturbation value associated with each unit, based on at least one continuous differential equation.

7.  The system of claim 6, wherein the neural network is configured to generate a continuous signal in respect of at least one of the output value (304) of the units of the neural network, the weights (306) associated with the directional connections between units of the neural network, the decorrelating parameters (305), or the perturbation value (301, 302) associated with each unit, wherein the continuous signal is configured to change according to the at least one continuous differential equation.

8.  The system of claim 6, wherein the neural network is configured to generate a sequence of values at discrete time points in respect of at least one of the output value (304) of the units of the neural network, the weights (306) associated with the directional connections between units of the neural network, the decorrelating parameters (305), or the perturbation value (301, 302) associated with each unit, based on the at least one continuous differential equation.

9.  The system of claim 1, wherein the neural network is configured to perform the calculation (302) of the perturbation value associated with each internal unit of the neural network further based on the weights of the directional connections of which each internal unit is the pre-synaptic unit.

10. The system of claim 1, wherein the units are organized in a plurality of ordered layers to generate an output based on an input,
wherein the neural network is configured to:

calculate (303) the internal state value for each unit of a particular layer of the neural network, based on output values of the units of a next-lower ranking layer of the neural network with respect to the particular layer, weights associated with the output values of the units of the next-lower ranking layer of the neural network, and a perturbation value associated with each unit of the particular layer of the neural network, wherein the output value of each unit of a lowest-ranking layer of the neural network corresponds to an input value of the neural network;

calculate (304) the output value for each unit of the particular layer of the neural network, based on the activation function and the internal state value of the unit;

calculate (301) the perturbation value and the internal state associated with each unit of a highest-ranking layer of the neural network based on the loss function;

calculate (302) the perturbation value associated with each unit of the particular layer based on the internal states of the units of a next-higher ranking layer of the neural network with respect to the particular layer; and

update (306) the weights associated with the output values of the units of the next-lower ranking layer of the neural network, based on the internal state of each unit of the particular layer of the neural network and the output value of each unit of the next-lower ranking layer of the neural network.

11. A neuromorphic computer system comprising the system according to any preceding claim.

12. The system of any one of claims 1 to 10 or the neuromorphic computer system of claim 11, wherein the system is configured to learn at least one of: signal processing, image processing, image recognition, image enhancement, audio processing, audio recognition, speech recognition, audio enhancement, fault detection of devices, and measurement analysis or wherein the system is deployed to implement on-chip or on-device continuous learning with or without a small power envelope for low-power on-chip learning and inference.

13. A method of training an artificial neural network comprising a plurality of units configured to generate an output based on an input,

wherein the units are interconnected via directional connections so that each connection has a pre-synaptic unit and a post-synaptic unit,
wherein a first subset of the units are input units, and an output value of an input unit corresponds to an input value of the neural network,
wherein a second subset of units are output units, and an output value of an output unit corresponds to an output value of the neural network;
wherein a third subset of units excluding the first subset and the second subset are internal units of the neural network;
wherein the method comprises:

calculating (303) an internal state value for each internal and output unit of the neural network based on output values of pre-synaptic units connected to each respective unit, weights associated with the directional connections of which each respective unit is the post-synaptic unit, and a perturbation value associated with each respective unit;
calculating (304) an output value for each internal and output unit of the neural network, based on an activation function and the internal state value of the respective unit;
calculating (301) a perturbation value and an internal state associated with an output unit of the neural network based upon a loss function capturing a desired network behaviour;
calculating (302) the perturbation value associated with each internal unit based on the internal states of the post-synaptic units of connections of which each internal unit is the pre-synaptic unit; and
updating (306) the weight associated with each directional connection between a pre-synaptic unit and a post-synaptic unit of the neural network based upon at least one of the internal state and the output value of the first post-synaptic unit and the first pre-synaptic unit.

14. The method of claim 13, wherein the method learns the neural network to perform a task of at least one of: signal processing, image processing, image recognition, image enhancement, audio processing, audio recognition, speech recognition, audio enhancement, fault detection of devices, and measurement analysis or wherein the method is deployed to implement on-chip or on-device continuous learning with or without a small power envelope for low-power on-chip learning and inference.

**15.** A computer program product comprising instructions that, when executed by a processor system, cause the processor system to perform the method according to claim 13 or 14.

# Fig. 1

# Fig. 2

201 Select data sample (including input and optionally an adjusted output) from dataset

202 Update network state and parameters for a time duration T0

203 Next data sample?

# Fig. 3

Update network state and parameters for a time duration T0 ～ 202

Update perturbation values of output layer ～ 301

Update perturbation values of hidden layers ～ 302

Update internal states ～ 303

Update output values ～ 304

Update decorrelating parameters ～ 305

Update weight parameters ～ 306

Europäisches
Patentamt

European
Patent Office

Office européen
des brevets

# EUROPEAN SEARCH REPORT

**Application Number**

EP 21 21 2911

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUJIE WU ET AL: "Brain-inspired global-local learning incorporated with neuromorphic computing", ARXIV.ORG, CORNELL UNIVERSITY LIBRARY, 201 OLIN LIBRARY CORNELL UNIVERSITY ITHACA, NY 14853, 5 June 2020 (2020-06-05), XP081975091, * figures 1, 4, S1 * * sections 0-2, 5 and 7 * ----- | 1-15 | INV. G06N3/08 G06N3/04 |

**TECHNICAL FIELDS SEARCHED (IPC)**

G06N

The present search report has been drawn up for all claims

| Place of search | Date of completion of the search | Examiner |
|---|---|---|
| The Hague | 24 May 2022 | Theissing, Simon |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. R. YOUNG ; M. E. DEAN ; J. S. PLANK ; G. S. ROSE.** A Review of Spiking Neuromorphic Hardware Communication Systems. *IEEE Access,* 2019, vol. 7, 135606-135620, doi: 10.1109/AC-CESS.2019.2941772

- **M. YANG ; S. -C. LIU ; T. DELBRUCK.** A Dynamic Vision Sensor With 1% Temporal Contrast Sensitivity and In-Pixel Asynchronous Delta Modulator for Event Encoding. *IEEE Journal of Solid-State Circuits,* September 2015, vol. 50 (9), 2149-2160